# EUROPÄISCHE PATENTSCHRIFT

(11) **EP 0 472 851 B1**
(45) Veröffentlichungstag und Bekanntmachung des Hinweises auf die Patenterteilung: **26.10.1994**
(21) Anmeldenummer: 91110642.5
(22) Anmeldetag: 27.06.1991
(51) Int. Cl.: F16B 13/02, F16B 13/00

(54) **Spreizdübel**
Expansible dowel
Cheville expansible

(30) Priorität: 25.08.1990 DE 4026944
(43) Veröffentlichungstag der Anmeldung: 04.03.1992
(73) Patentinhaber: fischerwerke Artur Fischer GmbH & Co. KG, D-72178 Waldachtal (DE)
(72) Erfinder: Haage, Manfred, Dipl.-Ing. FH, W-7295 Dornstetten-Aach (DE)

(56) Entgegenhaltungen:
- CH-A- 479 811
- CH-A- 554 497
- DE-A- 2 118 153
- FR-A- 2 094 481

## Beschreibung

Der Anspruch 1 geht im Oberbegriff von der DE-A-3 017 108 aus, die einen Spreizdübel mit am Dübelschaft versetzt hintereinander angeordneten und innerhalb des Dübelschaftes einen verengten Schraubkanal bildenden Spreizscheiben offenbart.

Der Dübelschaft ist bei diesem bekannten Dübel eine Metallhülse, in der mehrere Spreizelemente in entsprechenden Schlitzen der Hülse abgestützt sind. Die nach innen ragenden Kanten der Spreizelemente weisen eine halbkreisförmige Ausbuchtung auf, die jeweils eine Begrenzungsfläche eines Schraubkanals bilden. Erst durch das nächstfolgende Spreizelement ergibt sich die gegenüberliegende Begrenzungskante des Schraubkanals. Für die Funktion des bekannten Dübels ist es daher erforderlich, daß jedes einzelne Spreizelement für sich in einem Schlitz geführt und radial gesichert sein muß. Durch die einzeln abgestützten Spreizelemente ergibt sich nur eine geringe Spreizfläche, so daß eine Anwendung in Hohlkammerbausteinen oder Doppelstegplatten nicht möglich ist. Bei einer derartigen Anwendung ist es erforderlich, daß möglichst viele Spreizelemente innerhalb eines Steges zum Eingriff kommen. Ferner ist es zur Erzielung hoher Haltewerte erforderlich, daß an der Rückseite des Steges und im Hohlraum die Spreizelemente vollständig aufspreizen und sich gegenseitig abstützend an der Rückseite der Stege ein großflächiges Gegenlager bilden. Durch das Fehlen einer geschlossenen Bohrung für jedes einzelne Spreizelement bei dem bekannten Dübel sind die einzelnen Spreizelemente in radialer Richtung nicht gesichert. Demzufolge ist der bekannte Dübel nur für Anwendungen in Vollbaustoffen geeignet, bei denen eine geschlossene Bohrlochwandung vorliegt. Des weiteren müssen die Spreizelemente so angeordnet sein, daß die innere Begrenzungskante der Spreizelemente ein in den Gewindegang der Befestigungsschraube eingreifendes Gegengewinde bildet. Zur Erzielung einer axialen Verschiebung der Spreizelemente ist bei dem bekannten Dübel eine Schraube erforderlich, die einen konischen Kernquerschnitt aufweist. Aufgrund des konischen Kernquerschnittes ergibt sich jedoch im vorderen Dübelbereich eine geringere und im hinteren Dübelbereich eine stärkere radiale Verschiebung der Spreizelemente mit dem ungünstigen Ergebnis, daß im Bereich der Bohrlochmündung Spannungsspitzen entstehen, die zu einem Ausbrechen führen können.

Dem Anmeldungsgegenstand liegt die Aufgabe zugrunde, einen Spreizdübel zu schaffen, der sowohl für eine Verankerung in Vollbaustoffen als auch für Hohlraumbefestigungen geeignet ist.

Zur Lösung dieser Aufgabe weisen die Spreizscheiben beim Anmeldungsgegenstand jeweils eine exzentrische Bohrung auf, die mit der Bohrung der benachbarten Spreizscheibe versetzt und zur Bildung des verengten Schraubkanals überlappt ist. Ferner ist jede zweite aufeinanderfolgende Spreizscheibe an einem gemeinsamen, parallel zur Schieberichtung der Spreizscheiben angeordneten elastischen Verbindungssteg angebracht, wobei die Spreizscheiben auf Lücke versetzt übereinandergreifend nach innen abstehen.

Die als Spreizelemente wirkenden Spreizscheiben sind nahezu über die gesamte Länge des Spreizdübels angeordnet, so daß über den gesamten Spreizbereich eine sehr gleichmäßige Aufspreizung erhalten wird. Beim Eindrehen einer Befestigungsschraube werden die exzentrisch angeordneten Bohrungen der Spreizscheiben koaxial ausgerichtet, und zwar konzentrisch zur Mittelachse der Befestigungsschraube. Dadurch verschieben sich die Spreizscheiben je nach Lage der exzentrischen Bohrung. Vorzugsweise sind die Bohrungen benachbarter Scheiben zueinander versetzt angeordnet, so daß auch benachbarte Scheiben beim Eindrehen der Befestigungsschraube versetzt nach außen verschoben werden. Dadurch wird immer abwechselnd eine Spreizscheibe zur einen Seite und die nachfolgende Spreizscheibe zur anderen Seite verschoben. Ist der Spreizdübel in einen Vollbaustoff eingesetzt, so werden die Spreizscheiben jeweils gegenüberliegend an die Bohrlochwand gepreßt. Bei einer Verwendung in einem Hohlbaustoff greifen die Spreizscheiben in die Hohlräume ein, so daß ein Formschluß im Mauerwerk im Bereich jeder Wandung, die einen Hohlraum begrenzt, erreicht wird.

Die Spreizscheiben sind über Verbindungsstege miteinander verbunden, wobei jede zweite aufeinander folgende Spreizscheibe an einem gemeinsamen Verbindungssteg angebracht ist. Die an zwei separaten außen am Dübelschaft verlaufenden Verbindungsstegen nach innen abstehenden Spreizscheiben sind an jedem Verbindungssteg auf Lücke bezgl. der Spreizscheiben des anderen Verbindungsstegs angeordnet.

Vorzugsweise besitzt der Spreizdübel an seinem dem Dübelkopf abgewandten Schaftende einen Preßbund, in den die Befestigungsschraube eingreift, so daß ein axiales Verspannen des aus vielen Spreizscheiben bestehenden Spreizbereichs möglich ist.

Besonders vorteilhaft ist es, einen Spreizdübel mit der zugehörigen Befestigungsschraube so auszubilden, daß die Steigung der Befestigungsschraube ein ganzzahliges Vielfaches der Dicke der Spreizscheiben beträgt. Die einzelnen Spreizscheiben können sich somit zwischen den Gewindeflanken verkeilen und gegeneinander abstützen. Für den im Mauerwerk montierten Spreizdübel wird dadurch eine größere Festigkeit und damit eine höhere Belastbarkeit erreicht.

Die Erfindung wird nachfolgend anhand der Zeichnungen näher erläutert.
Es zeigen:
Figur 1 ein Ausführungsbeispiel eines Spreizdübels mit einer Vielzahl von Spreizscheiben,
Figur 2 zwei Schnittansichten des Spreizdübels von Figur 1,
Figur 3 einen Schnitt durch den Spreizdübel von Figur 1 vor der Montage,
Figur 4 einen Schnitt, durch den Spreizdübel im montiertem Zustand,
Figur 5 eine weitere Ansicht des Spreizdübels von Figur 1 und
Figur 6 eine Ansicht des in einem Hohlbaustoff montierten Spreizdübels.

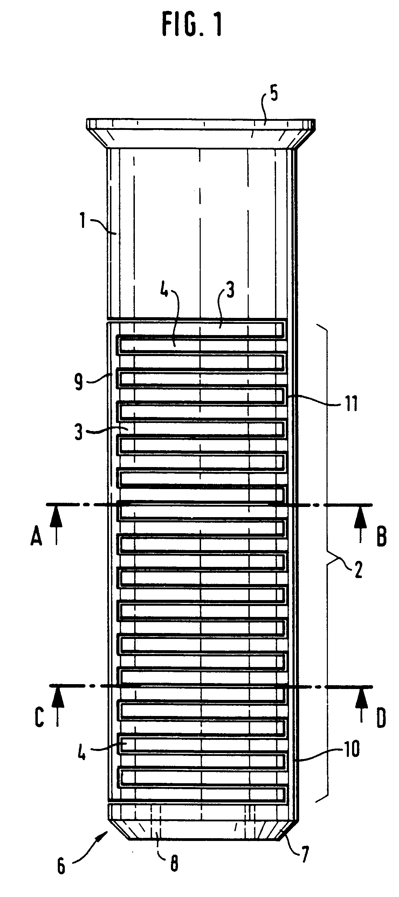

Der in Figur 1 dargestellte Spreizdübel ist als sogenannter Rahmendübel ausgebildet, der in Duchsteckmontage durch eine Bohrung eines zu befestigenden Rahmenteils in ein Bohrloch eines Mauerwerks einsetzbar ist. Der Spreizdübel besitzt einen Dübelschaft 1 mit einem Spreizbereich 2, der durch eine Vielzahl aufeinanderfolgender Spreizscheiben 3, 4 gebildet wird. Im oberen Bereich des Dübelschaftes 1 ist dieser als glatte Dübelhülse ausgebildet, an der sich oben ein trichterförmig erweiterter Dübelkopf 5 befindet. Der Dübelkopf 5 ist zur Aufnahme des Schraubenkopfes einer Senkkopfschraube geeignet.

Am unteren Schaftende 6 besitzt der Spreizdübel einen Preßbund 7 mit Axialbohrung 8, die als Gewindebohrung ausgebildet ist.

Die Spreizscheiben 3, 4 sind abwechselnd an einem linken Verbindungssteg 9 bzw. an einem rechten Verbindungssteg 10 angebracht.

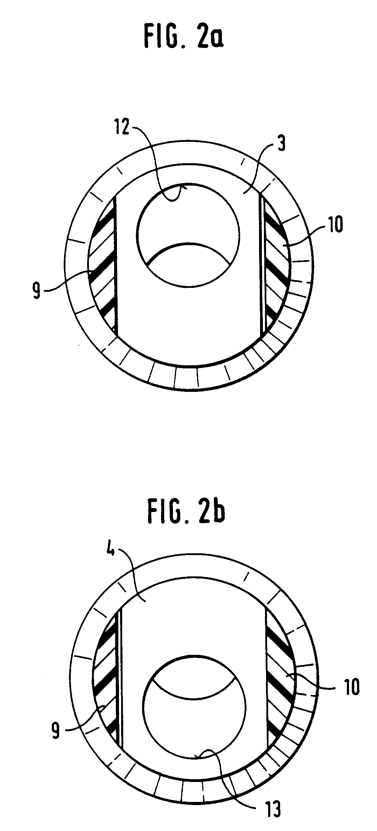

In Figur 2 sind die beiden Schnitte AB und CD des Dübelschaftes 1 von Figur 1 dargestellt. Der Schnitt AB zeigt die am Verbindungssteg 9 nach rechts abstehende Spreizscheibe 3 mit einer exzentrischen Bohrung 12.

Der Schnitt CD zeigt die am Verbindungssteg 10 nach links abstehende Spreizscheibe 4 mit einer exzentrischen Bohrung 13.

Die beiden Spreizscheiben 3, 4 sind seitlich verschiebbar bei dem in Figur 1 dargestellten Spreizdübel aufeinanderliegend angeordnet, wobei die exzentrischen Bohrungen 12, 13 entgegengesetzt ausgerichtet sind.

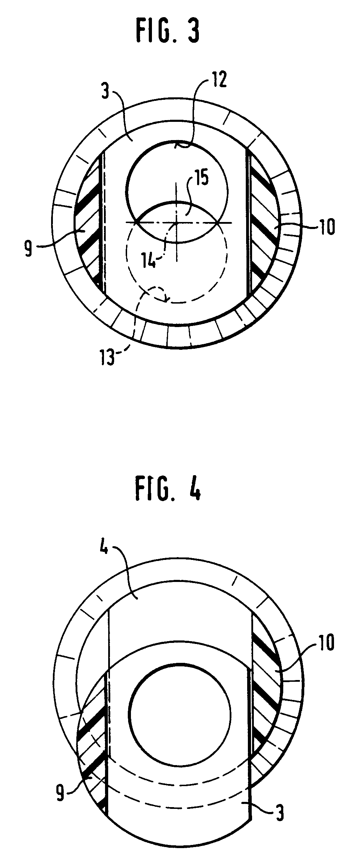

In Figur 3 ist die Position der Bohrungen 12, 13 innerhalb des Spreizbereichs 2 ersichtlich. Die exzentrischen Bohrungen 12, 13 überlappen sich im Bereich des Achsmittelpunkts 14, so daß sich in diesem Bereich ein verengter Schraubenkanal 15 bildet. Von einem verengten Schraubenkanal kann hier deshalb gesprochen werden, da der Gewindedurchmesser der in den Dübel einzusetzenden Befestigugsschraube in etwa dem Durchmesser der Bohrungen 12, 13 entspricht. Wird nun die Befestigungsschraube in den Spreizdübel gemäß Figur 1 eingeschraubt, so hat dies zur Folge, daß die exzentrischen Bohrungen 12, 13 aus ihrer exzentrischen Lage in eine koaxiale Lage gebracht werden, wie dies in Figur 4 dargestellt ist. Dabei werden die Spreizscheiben 3, 4 zwangsläufig nach unten und oben in die in Figur 4 dargestelle Position verschoben.

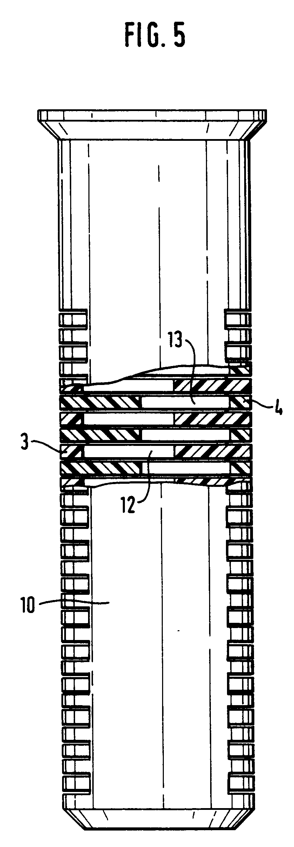

In Figur 5 ist der Spreizdübel von Figur 1 teilweise im Schnitt gezeichnet, wobei die exzentrischen Bohrungen 12, 13 der Scheiben 3, 4 seitlich versetzt angeordnet sind.

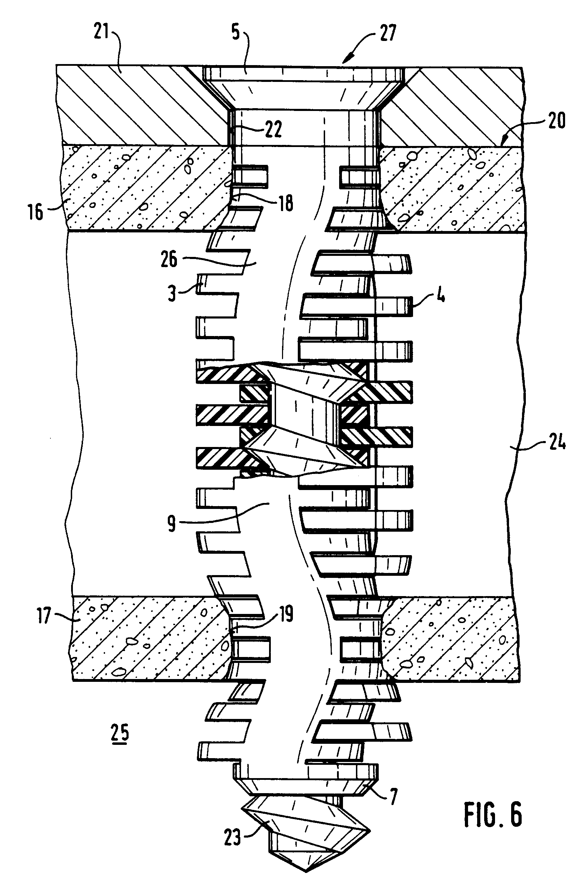

In Figur 6 ist der in einem Hohlbaustoff eingesetzte Spreizdübel von Figur 5 dargestellt. Der Hohlbaustoff besteht hier aus einem Wabenstein mit Wandungen 16, 17, in die jeweils koaxiale Bohrungen 18, 19 eingebracht sind. An der Wandoberfläche 20 liegt ein Rahmenteil 21 auf, in dessen Durchgangsbohrung 22 der Spreizdübel zunächst ohne Befestigungsschraube durchgesteckt worden ist. Nach Eindrehen einer Befestigungsschraube 23 haben sich die Spreizscheiben 3, 4 in die dargestellte Position entgegengesetzt verschoben, so daß der Spreizdübel formschlüssig im Bereich der Wandungen 16, 17 im Mauerwerk sitzt. Im Bereich der Bohrungen 18, 19 verpressen sich die Spreizscheiben 3, 4 mit der Bohrlochwandung. Am Übergangsbereich von den Bohrlöchern 18, 19 zu den Hohlräumen 24, 25 besitzt der Verbindungssteg 9 durch die unterschiedliche Auslenkung der Spreizscheiben 3 eine Wölbung 26.

Die Befestigungsschraube 23 ist eine herkömmliche Senkkopfschraube, deren Senkkopf 27 im trichterförmigen Dübelkopf 5 einliegt. Wird die Befestigungsschraube 23 entsprechend stark angezogen, so wird dadurch der Preßbund 7 in Richtung Dübelkopf 5 gezogen, wodurch sich die Spreizscheiben des Spreizbereichs verspannen. Der im Mauerwerk montierte Dübel erhält somit eine sehr hohe Steifigkeit, die eine äußerst sichere Befestigung gewährleistet.

Die Steigung der Befestigungsschraube 23 ist vorzugsweise so bemessen, daß diese einem ganzzahligen Vielfachen der Breite der Spreizscheiben 3, 4 entspricht. Im dargestellten Ausführungsbeilpiel entspricht die Steigung der Breite zweier Spreizscheiben 3, 4.

## Patentansprüche

1. Spreizdübel mit am Dübelschaft versetzt hintereinander angeordneten und innerhalb des Dübelschaftes einen verengten Schraubkanal bildenden Spreizscheiben, die beim Eindrehen einer Befestigungsschraube radial nach außen verschiebbar sind, **dadurch gekennzeichnet**, daß die Spreizscheiben (3, 4) jeweils eine exzentrische Bohrung (12, 13) aufweisen, die mit der Bohrung der benachbarten Spreizscheibe zur Bildung des verengten Schraubkanals überlappt ist, und daß jede zweite aufeinanderfolgende Spreizscheibe (3, 4) an einem gemeinsamen, parallel zur Schieberichtung der Spreizscheiben angeordneten elastischen Verbindungssteg (9, 10) angebracht ist, wobei die Spreizscheiben (3, 4) an den Verbindungsstegen (9, 10) auf Lücke versetzt übereinandergreifend nach innen abstehen.

2. Spreizdübel nach Anspruch 1, **dadurch gekennzeichnet**, daß an dem dem Dübelkopf (5) abgewandten Schaftende (6) ein Preßbund (7) mit Axialbohrung (8) die Verbindungsstege (9, 10) verbindet, die im Bereich des Dübelkopfes (5) in einen sie verbindenden hülsenförmigen Schaftteil übergehen.

3. Spreizdübel nach einem der vorhergehenden Ansprüche, **dadurch gekennzeichnet**, daß der Spreizdübel aus zwei mit ihren Spreizscheiben (3, 4) ineinandergreifenden Dübelhälften besteht.

4. Spreizdübel mit Befestigungsschraube nach einem der vorhergehenden Ansprüche, **dadurch gekennzeichnet**, daß die Steigung der Befestigungsschraube (23) ein ganzzahliges Vielfaches der Dicke der Spreizscheiben (3, 4) beträgt.

## Claims

1. Expansible plug with expansion discs staggered one behind the other on the plug shank and forming a constricted screw channel inside the plug shank, which expansion discs are arranged to be displaced radially outwards as a fixing screw is screwed in, characterized in that each expansion disc (3, 4) has an eccentric bore (12, 13) which is overlapped by the bore of the adjacent expansion disc to form the constricted screw channel, and every second successive expansion disc (3, 4) is mounted on a common resilient joining member (9, 10) arranged parallel to the displacement direction of the expansion discs, the expansion discs (3, 4) projecting inwards from the joining members (9, 10) and engaging over one another in a staggered configuration.

2. An expansible plug according to claim 1, characterized in that at the end (6) of the shank further from the plug head (5) a pressure collar (7) with an axial bore (8) joins the joining members (9, 10) which in the region of the plug head (5) become a sleeve-shaped shank part joining them.

3. An expansible plug according to one of the preceding claims, characterized in that the expansible plug comprises two plug halves engaging in one another by means of their expansion discs (3, 4).

4. An expansible plug with fixing screw according to one of the preceding claims, characterized in that the pitch of the fixing screw (23) is an integral multiple of the thickness of the expansion discs (3, 4).

## Revendications

1. Cheville expansible présentant des disques expansibles qui sont agencés en succession décalée sur le fût de la cheville, forment un canal rétréci de vissage à l'intérieur du fût de la cheville, et peuvent être animés de coulissements vers l'extérieur, dans le sens radial, lors de l'enfoncement d'une vis de fixation, caractérisée par le fait que les disques expansibles (3, 4) comportent respectivement un perçage excentré (12, 13) qui se chevauche avec le perçage du disque expansible voisin, en vue de former le canal rétré-ci de vissage ; et par le fait que l'un sur deux des disques expansibles successifs (3, 4) est implanté sur une membrure commune de solidarisation (9, 10), élastique et disposée parallèlement au sens de coulissement des disques expansibles, lesdits disques expansibles (3, 4) faisant saillie vers l'intérieur, sur les membrures de solidarisation (9, 10), avec superposition en quinconce.

2. Cheville expansible selon la revendication 1, caractérisée par le fait que, à l'extrémité (6) du fût tournée à l'opposé de la tête (5) de la cheville, un collet de compression (7) muni d'un perçage axial (8) relie les membrures de solidarisation (9, 10) fusionnant, dans la région de la tête (5) de la cheville, dans une partie de fût en forme de douille qui les relie.

3. Cheville expansible selon l'une des revendications précédentes, caractérisée par le fait que ladite cheville expansible se compose de deux demi-chevilles s'imbriquant l'une dans l'autre par leurs disques expansibles (3, 4).

4. Cheville expansible associée à une vis de fixation, selon l'une des revendications précédentes, caractérisée par le fait que le pas de la vis de fixation (23) représente un multiple entier de l'épaisseur des disques expansibles (3, 4).
